# EUROPÄISCHE PATENTANMELDUNG

(11) **EP 0 965 755 A2**
(43) Veröffentlichungstag der Anmeldung: **22.12.1999**
(21) Anmeldenummer: 99109407.9
(22) Anmeldetag: 11.05.1999
(51) Int. Cl.: F04C 2/344, F16H 39/00

(54) **Vorrichtung zur Übertragung einer Drehbewegung von einer Motoreinheit auf eine Verbrauchereinheit**

(30) Priorität: 17.06.1998 IT BO980376
(71) Anmelder: Monti, Gabriele, 40043 Sibano Marzabotto (BO) (IT); Monti, Carlo, 40043 Sibano Marzabotto (BO) (IT)
(72) Erfinder: Monti, Gabriele, 40043 Sibano Marzabotto (BO) (IT); Monti, Carlo, 40043 Sibano Marzabotto (BO) (IT)
(74) Vertreter: Gustorf, Gerhard, Dipl.-Ing.

(57) **Zusammenfassung**

Die Vorrichtung dient zur Übertragung einer Drehbewegung von einer Motoreinheit (2) auf eine Verbrauchereinheit (3) und hat eine mit der Motoreinheit (2) verbundene Welle (11) und eine mit der Verbrauchereinheit (3) verbundene Welle (12), welche starr mit einem gehäuseförmigen Körper (52) verbunden ist, der in seinem Inneren eine Kammer (17) aufweist und wenigstens eine Öffnung (25, 26, 33, 34) hat, welche mit der Kammer (17) und mit dem Raum außerhalb des gehäuseförmigen Körpers (52) verbunden ist. Die mit der Motoreinheit (2) verbundene Welle (11) ist starr mit einem Pumporgan (14, 15, 16) verbunden, das sich in der Kammer (17) befindet und im Betrieb ein Medium durch die Öffnung (25, 26, 33, 34) in die Kammer (17) zurückführt, wenn wenigstens eine der Wellen (11, 12) rotiert. Die Kammer (17) ist mit wenigstens einer Durchlaßbohrung (39) verbunden, welche eine Verbindung zu dem genannten Außenraum herstellt. Über eine Ventileinrichtung (40) kann die Durchlaßbohrung (39) steuerbar mit dem Außenraum verbunden werden.

## Beschreibung

Die Erfindung betrifft eine Vorrichtung zur Übertragung einer Drehbewegung von einer Motoreinheit auf eine Verbrauchereinheit.

Insbesondere bezieht sich die Erfindung auf eine derartige Vorrichtung, die als Strömungsmaschine ausgebildet ist, beispielsweise eine ölhydraulische Vorrichtung, die dazu dient, eine Drehbewegung mit beliebiger, einstellbarer Geschwindigkeit von einer Motoreinheit auf eine Verbrauchereinheit zu übertragen.

Bei bekannten Vorrichtungen dieser Bauart ist eine Pumpe vorgesehen, die mit der Motoreinheit verbunden ist und die Aufgabe hat, Drucköl durch einen Kanal zu einem hydraulischen Motor zu pumpen, der mit der Verbrauchereinheit verbunden ist. Entlang des Kanals ist ein Umlenkventil vorgesehen, mit dessen Hilfe das zu dem hydraulischen Motor geleitete öl dosiert wird, um die Drehgeschwindigkeit des hydraulischen Motors zu verändern. Aufgrund der notwendigen Pumpe und des Hydromotors sind diese Vorrichtungen jedoch verhältnismäßig kompliziert und teuer.

Der Erfindung liegt die Aufgabe zugrunde, eine Vorrichtung der eingangs genannten Bauart zur Verfügung zu stellen, die besonders einfach aufgebaut und wirtschaftlich im Betrieb ist sowie einen guten Wirkungsgrad aufweist.

Erfindungsgemäß wird diese Aufgabe durch die Merkmale des Patentanspruchs 1 gelöst.

Vorteilhafte Weiterbildungen ergeben sich aus den Unteransprüchen und aus der folgenden Beschreibung eines bevorzugten Ausführungsbeispiels, das in der Zeichnung dargestellt ist. Es zeigen:
Figur 1 einen Längsschnitt durch eine Vorrichtung gemäß der Erfindung und
Figur 2 einen Querschnitt in der Ebene II-II der Figur 1.

In der Zeichnung ist die Vorrichtung zur Übertragung einer Drehbewegung mit variabler Geschwindigkeit insgesamt mit 1 bezeichnet. Die Drehbewegung wird von einer Motoreinheit 2 auf eine Verbrauchereinheit 3 übertragen, welche beide schematisch als Blöcke dargestellt sind.

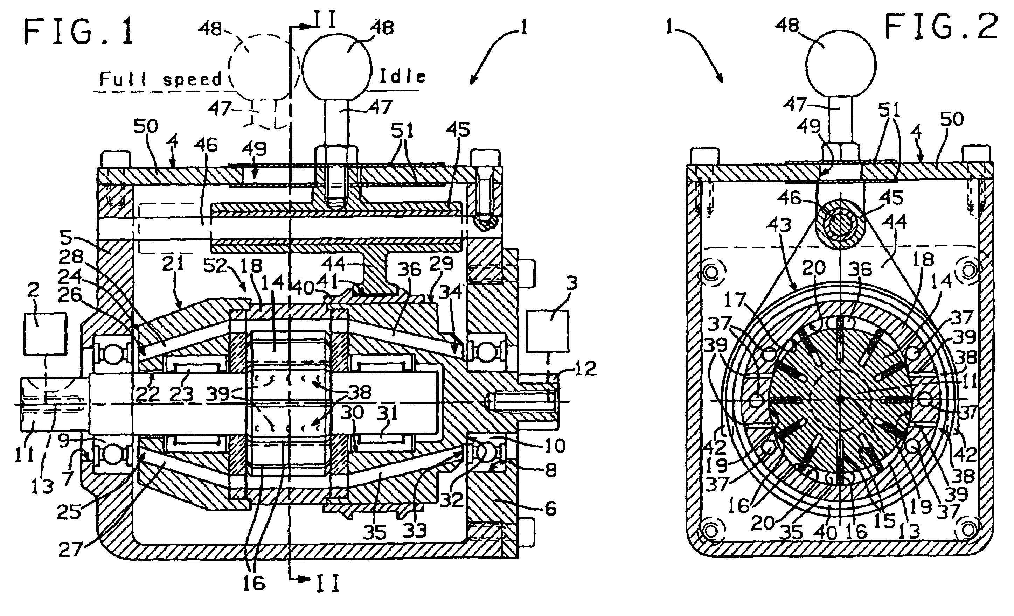

Die Übertragungsvorrichtung 1 hat ein kastenförmiges Gehäuse 4, das auf einem nicht dargestellten Untergestell ruht und eine im wesentlichen parallelepipedische Form hat. Das Gehäuse 4 nimmt eine bestimmte Menge eines Öles oder einer anderen Flüssigkeit auf. In zwei vertikale, einander gegenüberliegende Wände 5 und 6 des Gehäuses 4 (in Figur 1 die linke und die rechte Wand) sind horizontale, zueinander koaxiale Öffnungen 7 und 8 eingearbeitet, in denen über Lager 9 und 10 jeweils eine Welle 11 bzw. 12 gelagert ist. Die Wellen erstrecken sich entlang einer gemeinsamen, horizontalen Achse 13 teilweise innerhalb und teilweise außerhalb des Gehäuses 4. Nicht dargestellte Dichtungen im Bereich der Lager 9 und 10 verhindern, daß das Öl über die Öffnungen 7 und 8 aus dem Gehäuse 4 auslaufen kann.

Die aus dem Gehäuse 4 hervorstehenden Enden der Wellen 11 und 12 sind in nicht gezeigter Weise mit der Motoreinheit 2 bzw. der Verbrauchereinheit 3 gekuppelt.

Wie insbesondere Figur 2 zeigt, ist ein Endbereich der Welle 11, der sich innerhalb des Gehäuses 4 befindet, fest und koaxial mit einem zylindrischen Element 14 verbunden, das auf seinem Umfang mit gleichmäßigen Winkelabständen verteilt schlitzförmige Aussparungen 15 hat, die sich in diametralen Ebenen des zylindrischen Elementes 14 erstrecken. Jede Aussparung 15 nimmt einen flach ausgebildeten Flügel 16 auf, der bezüglich des zylindrischen Elementes 14 diametral verschiebbar ist und rechtwinklig zur Achse 13 gemessen dieselbe Breite wie die zugehörige Aussparung 15 hat. Nachstehend ist aus Gründen, die sich aus der Beschreibung ergeben, die aus dem zylindrischen Element 14 und den in den Aussparungen 15 sitzenden Flügeln 16 bestehende Einheit als Pumporgan bezeichnet.

Das zylindrische Element 14 ist mit seinen Flügeln 16 in einer Kammer 17 angeordnet, die in einen Zylinder 18 eingearbeitet ist. In jeder rechtwinklig zur Achse 13 verlaufenden Ebene hat die Kammer 17 ein Querschnittsprofil, das auf gegenüberliegenden Seiten durch zwei untereinander gleiche Kreisbögen 19 gebildet wird, deren gemeinsames Zentrum auf der Längsachse 13 der Kammer 17 liegt; diese Kreisbögen 19 sind im Bereich ihrer horizontal gegenüberliegenden Enden mit zwei nicht kreisförmigen Bögen 20 verbunden, die zusammen mit den Kreisbögen 19 dem Querschnittsprofil eine ellipsenförmige Ausbildung verleihen.

An das in Figur 1 linke Ende des Zylinders 18 ist koaxial zu diesem ein Drehkörper 21 angesetzt, der innen eine Bohrung 22 hat, welche über ein Lager 23 koaxial auf die Welle 11 aufgesetzt ist. In die Wand 24 des Drehkörpers 21, die der mit dem Zylinder 18 verbundenen Seite gegenüberliegt, sind zwei Öffnungen 25 und 26 eingearbeitet, welche in Figur 1 unten bzw. oben liegen und bezüglich der Achse 13 diametral gegenüberliegend in der Nähe der Welle 11 angeordnet sind; diese Öffnungen liegen in den Bereichen des Drehkörpers 21, die im wesentlichen in einer Diametralebene des Drehköpers 21 liegen, welche die nicht kreisförmigen Bögen 20 schneidet. Die Öffnungen 25 und 26 sind die Enden von zwei Kanälen 27 und 28, die durch den Drehkörper 21 hindurchlaufen, sich in der genannten Diametralebene erstrecken und mit ihren anderen Enden in die Kammer 17 münden.

Auf das in Figur 1 rechte Ende des Zylinders 18 ist axial ein weiterer Drehkörper 29 von im wesentlichen zylindrischer Ausbildung aufgesetzt, der in seinem Inneren eine Bohrung 30 hat, die über ein Lager 31 auf der Welle 11 sitzt.

Mit einer Wand 32 des Drehkörpers 29, die der mit dem Zylinder 18 verbundenen Wand axial gegenüberliegt, ist das innerhalb des Gehäuses 4 liegende Ende der Welle 12 koaxial fest verbunden. Diese Wand 32 hat zwei Öffnungen 33 und 34, die bezüglich Figur 1 analog zu den Öffnungen 25 und 26 unten bzw. oben liegen und die Enden von zwei Kanälen 35 und 36 bilden, die in der genannten Diametralebene durch den Drehkörper 29 hindurchlaufen und deren andere Enden in die Kammer 17 münden.

Nicht dargestellte Schrauben sind koaxial in Bohrungen 37 eingesetzt, welche in die Drehkörper 21 und 29 sowie in den Zylinder 18 parallel zur Achse 13 eingearbeitet sind und dazu dienen, die Drehkörper 21 und 29 fest mit dem Zylinder 18 zu verbinden. Durch diese Verbindung und über nicht dargestellte Dichtelemente zwischen dem Drehkörper 21 und dem Zylinder 18 sowie zwischen diesem und dem Drehkörper 29 ist die Kammer 17 bezüglich des Innenraums des Gehäuses 4 abgedichtet, zumindest im Sinne der Beschreibung im nachstehenden Absatz.

Der Zylinder 18 hat in seinen bezüglich der Achse 13 diametral gegenüberliegenden Bereichen und in der Nähe der Berührungszone zwischen dem zylindrischen Element 14 und der durch die Kreisbögen 19 gebildeten Oberfläche der Kammer 17 zwei Reihen 38 von parallel zur Achse 13 verlaufenden Durchlaßbohrungen 39, die parallel zueinander mit gleichen Abständen angeordnet sind. Die beiden Reihen 38 jedes Paares befinden sich auf in Umfangsrichtung bezüglich der genannten Berührungszone gegenüberliegenden Streifen, wobei die Durchlaßbohrungen 39, welche die Bänder bilden, sich etwa radial zu dem Zylinder 18 erstrecken.

Auf einen Teil des Zylinders 18 und des Drehkörpers 29 ist koaxial ein Ring 40 aufgesetzt, der relativ zu dem Zylinder 18 und dem Drehkörper 29 axial verschiebbar ist. Die Axialerstreckung des Ringes 40 ist größer als die Länge der genannten Reihen 38 der Bohrungen 39. In die Außenseite des Ringes 40 ist eine Ringnut 41 eingearbeitet, in die teilweise die Schenkel 42 einer Gabel 43 eingreifen. Diese Gabel 43 ist nach oben hin als vertikale Platte 44 ausgebildet, die sich rechtwinklig zur Achse 13 erstreckt und an ihrem unteren Ende die Schenkel 42 trägt, während das obere Ende mit einer Hülse 45 verbunden ist, die sich entlang einer horizontalen Achse erstreckt, die parallel zur Achse 13 verläuft. Die Hülse 45 ist koaxial verschiebbar auf einer Stange 46 gelagert, die mit ihren Enden in den Wänden 5 und 6 sitzt. Die Oberseite der Hülse 45 ist mit einem vertikalen Schaft 47 verbunden, der an seinem oberen Ende einen Griff 48 aufweist; der Schaft 47 ragt durch eine Öffnung 49 hervor, die in die obere Wand 50 des Gehäuses 4 eingearbeitet ist. Mit dem Schaft 47 sind im Bereich der Öffnung 49 Dichtelemente 51 verbunden, die einen druckdichten Abschluß des Gehäuses 4 gewährleisten.

Die Öffnung 49 ist so ausgebildet, daß der Schaft 47 aus nachstehend erläuterten Gründen nach beiden Seiten hin Verschiebungen parallel zur Achse 13 ausführen kann, welche so ausgerichtet sind, daß der Ring 40 zwischen zwei Endstellungen verschoben werden kann, in denen der im wesentlichen als Ventil oder Absperrelement wirkende Ring 40 die Reihen 38 der Bohrungen 39 vollständig abdeckt bzw. vollständig geöffnet läßt.

Nachstehend wird die Wirkungsweise der Vorrichtung 1 gemäß der Erfindung erläutert, wobei zu Anfang ein Betriebszustand betrachtet wird, in welchem sich der Ring 40 in einer Stellung befindet, in der die Reihen 38 der Bohrungen 39 geöffnet sind.

Wenn durch die Motoreinheit 2 die Welle 11 in Drehung versetzt wird, rotiert auch das zylindrische Element 14 um die Achse 13.

Dabei nehmen die in dem zylindrischen Element 14 gelagerten Flügel 16 aufgrund der Fliehkraft innerhalb der Aussparungen 15 eine solche Stellung ein, daß sie mit ihren diametral äußeren Rändern ständig in Berührung mit der Innenwand der Kammer 17 sind.

Die Ölmenge, die sich in dem Gehäuse 4 befindet, ist so bemessen, daß der freie Ölspiegel über dem niedrigsten Pegel liegt, welcher vom oberen Rand der Öffnungen 25 und 33 erreicht werden kann, und daß eine bestimmte Ölmengen, vorzugsweise dann, wenn die Kanäle 27, 28, 35 und 36 die in Figur 1 gezeigten Stellungen einnehmen, die unten liegenden Kanäle 27 und 35 sowie die Bereiche der Kammer 17, die zwischen einigen aufeinander folgenden Paaren von Flügeln 16 liegen, füllt.

Wenn, wie erwähnt, das zylindrische Element 14 in Drehung versetzt wird, befindet sich der gehäuseförmige Körper 52, bestehend aus dem Zylinder 18 und den beiden Drehkörpern 21 und 29, im Ruhezustand.

Da sich in dieser Situation das zylindrische Element 14 mit seinen Flügeln 16 als Rotor einer bekannten Flügelzellenpumpe verhält, nimmt das zur Verfügung stehende Volumen für das Öl zwischen aufeinander folgenden Flügelpaaren 16 in Drehrichtung des zylindrischen Elementes 14 zwischen den Zonen, in denen die Kanäle 27, 28, 35 und 36 in die Kammer 17 münden, und den Berührungszonen zwischen dem zylindrischen Element 14 und der Kammer 17 allmählich ab. Dadurch wird jedoch keine Druckerhöhung des Öles verursacht, da sich, wie erwähnt, der Ring 14 in einer Stellung befindet, in der alle Bohrungen 39 geöffnet bleiben, so daß durch diese das Öl frei in das Gehäuse 4 abfließen kann. In der erläuterten Stellung entspricht daher einer Drehbewegung der Welle 11 ein Stillstand des gehäuseförmigen Körpers 52 und damit auch der Welle 12.

Wenn der Griff 48 in seine in Figur 1 gestrichelt eingezeichnete Stellung gebracht wird, wird auch der Ring 40 in Axialrichtung verschoben, so daß alle Bohrungen 39 verschlossen werden. Damit erfährt das Öl, das sich zwischen den aufeinander folgenden Flügelpaaren 16 befindet, welche sich in Drehrichtung des zylindrischen Elementes 14 zwischen den Zonen befinden, in denen die Kanäle 27, 28, 35 und 36 in die Kammer 17 münden, und den Berührungszonen zwischen dem zylindrischen Element 14 und der Kammer 17 eine Druckerhöhung. Da das Öl durch die Bohrungen 39 nicht in die Kammer 17 abfließen und das Volumen nicht kleiner werden kann, fehlt dem zylindrischen Element 14 die Möglichkeit, sich relativ zu der Kammer 17 zu drehen, so daß das zylindrische Element 14 und der gehäuseförmige Körper 52 beide beginnen, sich zu drehen, wobei sie sich als ein einstückiger Block verhalten und dabei auch die Welle 12 mit derselben Geschwindigkeit wie die Welle 11 in Drehung versetzen.

Wenn der Ring 40 in eine Stellung zwischen den beiden zuvor erläuterten Extrempositionen gebracht wird, kann eine veränderbare Ölmenge, die von der Zahl der offenen Bohrungen 39 abhängt, durch diese Bohrungen 39 aufgrund der genannten Druckerhöhung abfließen. Daraus folgt, daß mangels einer vollständigen Entkoppelung und mangels einer starren Kopplung zwischen dem gehäuseförmigen Körpers 52 und dem zylindrischen Element 14 bei Drehung der Welle 11 und des zylindrischen Elementes 14 der gehäuseförmige Körper 52 mit einer Drehgeschwindigkeit mitgenommen wird, die umgekehrt proportional zur Ölmenge ist, welche durch die Bohrungen 39, die durch den Ring 40 nicht abgedeckt werden, abfließen kann.

Gemäß nicht dargestellter Varianten der Erfindung ist es auch möglich, daß die Kammer 17 eine andere Form aufweisen kann, denn es ist möglich, daß diese in jeder beliebigen Schnittebene rechtwinklig zur Achse 13 begrenzt wird durch eine Zahl von Kreisbögen und/oder nicht kreisförmigen Bögen, die sich von den zuvor erläuterten unterscheidet. Ferner können die nicht kreisförmigen Bögen 20 durch Kreisbögen ersetzt werden, deren Druchmesser sich von denjenigen der Kreisbögen 19 unterscheidet.

Auch ist es möglich, eine andere Zahl von Kanälen 27, 28, 35 und 36 vorzusehen, deren Enden an anderen Positionen als den erläuterten vorgesehen sind.

Die genannten Durchlaßbohrungen 39 können ebenfalls in unterschiedlicher Zahl und Form und an anderen als den beschriebenen Stellen vorgesehen sein. Die in dem Gehäuse 4 der Vorrichtung 1 enthaltene Flüssigkeit muß nicht notwendigerweise Öl sein; so ist es beispielsweise auch möglich, daß das Medium, welches in die Kanäle 27, 28, 35 und 36 eintritt und in die Kammer 17 gelangt, ein Gas ist.

Zur Verschiebung des Ringes können auch andere Maßnahmen vorgesehen werden, ohne hierbei einen Griff 48 einzusetzen.

Gemäß einer weiteren und nicht dargestellten Variante der Erfindung kann jedem Flügel 16 ein nicht gezeigtes, elastisches Element zugeordnet werden, so daß der jeweilige Flügel 16 ständig in Richtung auf die Innenwand der Kammer 17 gedrückt wird; dabei wäre es möglich, die Welle 12 mit der Motoreinheit 2 und die Welle 11 mit der Verbrauchereinheit 3 zu verbinden; in diesem Fall würde im Betrieb der entsprechend ausgebildeten Vorrichtung einer Drehbewegung der Welle 12 eine konstante Drehbewegung des gehäuseförmigen Körpers 52 entsprechen, während eine Haltephase oder eine Drehbewegung mit gewünschter Geschwindigkeit des zylindrischen Elementes 14 und der damit verbundenen Welle 11 abhängig wäre von der durch den Ring 40 aufgeprägten Axialstellung.

Aus der Beschreibung ergibt sich, daß die Einheit, welche durch den gehäuseförmigen Körper 52 und das zylindrische Element 14 mit seinen Flügeln 16 gebildet wird, im wesentlichen eine Rotationspumpe bildet, in welcher die Antriebswelle und das äußere Gehäuse alternativ mit einer Motoreinheit und einer Eingangswelle einer Verbrauchereinheit verbunden werden, wobei die Förderleistung in der zuvor beschriebenen Weise gesteuert wird. Daraus ergibt sich, daß die zuvor erläuterte Rotationspumpe mit entsprechenden Anpassungen, die der Fachmann in Kenntnis der Erfindung ergreift, durch jede andere Pumpenart ersetzt werden kann, die eine rotierende Antriebswelle und ein äußeres Gehäuse aufweist, das im normalen Einsatzfall der Pumpe stillsteht.

## Patentansprüche

1. Vorrichtung zur Übertragung einer Drehbewegung von einer Motoreinheit auf eine Verbrauchereinheit, gekennzeichnet durch eine mit der Motoreinheit (2) verbundene Welle (11) und eine mit der Verbrauchereinheit (3) verbundene Welle (12), welche starr mit einem gehäuseförmigen Körper (52) verbunden ist, der in seinem Inneren eine Kammer (17) aufweist und wenigstens eine Öffnung (25, 26, 33, 34) hat, welche mit der Kammer (17) und mit dem Raum außerhalb des gehäuseförmigen Körpers (52) verbunden ist, wobei die mit der Motoreinheit (2) verbundene Welle (11) starr mit einem Pumporgan (14, 15, 16) verbunden ist, das sich in der Kammer (17) befindet und im Betrieb ein Medium durch die Öffnung (25, 26, 33, 34) in die Kammer (17) zurückführt, wenn wenigstens eine der Wellen (11, 12) rotiert, wobei die Kammer (17) mit wenigstens einer Durchlaßbohrung (39) verbunden ist, welche eine Verbindung zu dem genannten Außenraum herstellt, und wobei eine Ventileinrichtung (40) vorgesehen ist, über welche die Durchlaßbohrung (39) steuerbar mit dem Außenraum verbunden werden kann.

2. Vorrichtung nach Anspruch 1, dadurch gekennzeichnet, daß der gehäuseförmige Körper (52) in einem festen Gehäuse (4) untergebracht ist, welches das Medium aufnimmt.

3. Vorrichtung nach Anspruch 1 oder 2, dadurch gekennzeichnet, daß das Medium eine Flüssigkeit ist.

4. Vorrichtung nach Anspruch 3, dadurch gekennzeichnet, daß die Flüssigkeit aus Öl besteht.

5. Vorrichtung nach einem der Ansprüche 1 bis 3, dadurch gekennzeichnet, daß das Medium ein Gas ist.

6. Vorrichtung nach einem der vorhergehenden Ansprüche, dadurch gekennzeichnet, daß das Pumporgan ein zylindrisches Element (14) aufweist, welches am Außenumfang mit gleichbleibendem Winkelabstand nebeneinanderliegende Aussparungen (15) hat, die sich in Diametralebenen des zylindrischen Elementes (14) erstrecken und von denen jede einen bezüglich des zylindrischen Elementes (14) diametral verschiebbaren Flügel (16) aufweist, der rechtwinklig zur Achse des zylindrischen Elementes (14) gemessen eine im wesentlichen gleiche Abmessung wie die Aussparung (15) hat.

7. Vorrichtung nach Anspruch 6, dadurch gekennzeichnet, daß die Ventileinrichtung (40) in der Nähe wenigstens einer Zone der Berührung zwischen dem zylindrischen Element (14) und der Kammer (17) angeordnet ist.

8. Vorrichtung nach Anspruch 6 oder 7, dadurch gekennzeichnet, daß die Kammer (17) in jeder Schnittebene rechtwinklig zur Achse (13) des zylindrischen Elementes (14) so ausgebildet ist, daß wenigstens ein Teil des Umfangs von einem Kreisbogen (19) und wenigstens ein weiterer Teil des Umfangs von einem nicht kreisförmigen Bogen (20) gebildet wird.

9. Vorrichtung nach Anspruch 6 oder 7, dadurch gekennzeichnet, daß die Kammer (17) in jeder Schnittebene rechtwinklig zur Achse (13) des zylindrischen Elementes (14) von wenigstens zwei Kreisbögen (19) unterschiedlicher Durchmesser begrenzt wird.

10. Vorrichtung nach Anspruch 8 oder 9, dadurch gekennzeichnet, daß die Kammer (17) in jeder beliebigen Schnittebene rechtwinklig zur Achse (13) des zylindrischen Elementes (14) einen Mittelbereich aufweist, der von zwei untereinander gleichen Kreisbögen (19) begrenzt wird, die diametral einander gegenüberliegen und deren gemeinsames Zentrum auf der Achse (13) des zylindrischen Elementes (14) liegt, wobei diese Kreisbögen (19) an ihren Enden durch zwei nicht kreisförmige Bögen (20) miteinander verbunden sind.

11. Vorrichtung nach Anspruch 8 oder 9, dadurch gekennzeichnet, daß die Kammer (17) in jeder beliebigen Schnittebene rechtwinklig zur Achse (13) des zylindrischen Elementes (14) einen Mittelbereich hat, der von zwei untereinander gleichen Kreisbögen (19) begrenzt wird, welche einen ersten Durchmesser haben, einander gegenüberliegend angeordnet sind und mit ihrem gemeinsamen Zentrum auf der Achse (13) des zylindrischen Elementes (14) liegen, wobei diese Kreisbögen (19) an ihren Enden über zwei Kreisbögen (20) miteinander verbunden werden, deren Durchmesser nicht mit dem Durchmesser der ersten Kreisbögen (19) übereinstimmt.

12. Vorrichtung nach einem der vorhergehenden Ansprüche, dadurch gekennzeichnet, daß die Durchlaßbohrung (39) in eine Wand des gehäuseförmigen Körpers (52) eingearbeitet ist und daß die Ventileinrichtung Absperrelemente (40) aufweist, die die Durchlaßbohrung (39) veränderbar abdecken.

13. Vorrichtung nach Anspruch 12, dadurch gekennzeichnet, daß eine Reihe (38) von Durchlaßbohrungen (39) vorgesehen ist, welche im wesentlichen gleiche Abstände voneinander haben, wobei sich diese Reihe (38) parallel zur Längsachse (13) der beiden Wellen (11, 12) erstreckt.

14. Vorrichtung nach Anspruch 12, dadurch gekennzeichnet, daß zwei Reihenpaare (38) von Durchlaßbohrungen (39) vorgesehen sind, die im wesentlichen gleiche Abstände voneinander haben, wobei die Reihenpaare (38) sich parallel zur Längsachse (13) der Wellen (11, 12) erstrecken.

15. Vorrichtung nach einem der vorhergehenden Ansprüche, dadurch gekennzeichnet, daß das Pumporgan (14, 15, 16) starr mit einer Welle (11) verbunden ist, die ihrerseits mit der Motoreinheit (2) gekoppelt ist.

16. Vorrichtung nach einem der Ansprüche 1 bis 14, dadurch gekennzeichnet, daß der gehäuseförmige Körper (52) starr mit einer Welle (12) verbunden ist, welche ihrerseits mit der Motoreinheit (2) gekoppelt ist.

17. Vorrichtung nach Anspruch 16 in Abhängigkeit von den Ansprüchen 6 bis 14, dadurch gekennzeichnet, daß jedem Flügel (16) elastische Mittel zugeordnet sind, welche den Flügel in seiner Aussparung (15) bezüglich des zylindrischen Elementes (14) diametral nach außen drücken.

18. Vorrichtung nach einem der Ansprüche 12 bis 17, dadurch gekennzeichnet, daß das Absperrelement aus einem Ring (40) besteht, welcher auf einen Teil des gehäuseförmigen Körpers (52) aufgesetzt ist und auf diesem in beiden Richtungen verschiebbar gelagert ist.

19. Vorrichtung nach einem der vorhergehenden Ansprüche, dadurch gekennzeichnet, daß der gehäuseförmige Körper (52) zwei Drehkörper (21, 29) sowie einen im wesentlichen zylindrischen Körper (18) aufweist, welche koaxial paarweise aneinander angesetzt und fest miteinander verbunden sind, wobei der zylindrische Körper (18) zwischen den beiden Drehkörpern (21, 29) liegt und die Kammer (17) in den zylindrischen Körper (18) eingearbeitet ist.

20. Vorrichtung nach einem der vorhergehenden Ansprüche, gekennzeichnet durch ein Gehäuse (4), welches den gehäuseförmigen Körper (52) aufnimmt und aus dem die Wellen (11, 12) mit ihren Enden hervorstehen.
